Europäisches Patentamt

European Patent Office

Office européen des brevets

(19)

(11) Veröffentlichungsnummer : **0 185 134**
**B1**

(12)                     # EUROPÄISCHE PATENTSCHRIFT

(45) Veröffentlichungstag der Patentschrift :
19.10.88

(21) Anmeldenummer : 85110162.6

(22) Anmeldetag : 13.08.85

(51) Int. Cl.⁴ : **F 16 J 15/34**

(54) **Verschleissindikator für eine Gleitringdichtung.**

(30) Priorität : 04.12.84 DE 3444175

(43) Veröffentlichungstag der Anmeldung :
25.06.86 Patentblatt 86/26

(45) Bekanntmachung des Hinweises auf die Patenterteilung : 19.10.88 Patentblatt 88/42

(84) Benannte Vertragsstaaten :
AT BE CH DE FR GB IT LI LU NL SE

(56) Entgegenhaltungen :
EP-A- 0 077 206
DE-A- 1 905 350
FR-A- 2 242 603
US-A- 3 914 734

(73) Patentinhaber : **Feodor Burgmann Dichtungswerke
GmbH & Co.
Äussere Sauerlacher Strasse 6-8
D-8190 Wolfratshausen 1 (DE)**

(72) Erfinder : **Zechmeister, Johann
Nelkenweg 20
D-8192 Geretsried (DE)**
Erfinder : **Riebel, Hartmut
Sudetenstrasse 5
D-8190 Wolfratshausen (DE)**

(74) Vertreter : **Empl, Karl et al
Patentanwälte Dipl.-Ing. K. Empl Dipl.-Ing., Dipl.-Wirt-
sch.-Ing. K. Fehners Schumannstrasse 2
D-8000 München 80 (DE)**

## Beschreibung

Die Erfindung betrifft einen Verschleißindikator für den stationären (drehfest gehaltenen), mit seiner in einer Radialebene gelegenen Gleitfläche an einem rotierenden Gegenring anliegenden Gleitring einer Gleitringdichtung, welcher nach Abtragung einer vorgegebenen axialen Verschleißschicht-Dicke ein für Melde- und/oder Steuerzwecke auswertbares elektrisches Steuersignal abgibt, mit zwei gegeneinander isolierten Elektroden aus elektrisch leitendem Material, welche beide am stationären Gleitring mit ihren zu dessen Gleitfläche gerichteten frontseitigen Enden in einem der vorgegebenen Verschleißschicht-Dicke entsprechenden Abstand von dieser Gleitfläche, sowie in einem innerhalb der radialen Breite der Gleitfläche des Gegenringes liegenden, im wesentlichen gleich großen Radialabstand von der Dichtungsachse winkelmäßig versetzt angeordnet sind und mit einer auf Änderungen des elektrischen Widerstandes zwischen zwei Eingangspolen unter Abgabe des elektrischen Steuersignals reagierende Auswertschaltung, deren beide Eingangspole an die Elektroden angeschaltet sind.

Bei einem bekannten derartigen Verschleißindikator (DE-U-7 343 216) schließt sich nach Abtragung der Verschleißschicht der Stromkreis zwischen den beiden Eingangspolen der Auswertschaltung über die eine Elektrode, dem aus elektrisch leitendem Material bestehenden rotierenden Gegenring und die andere Elektrode. Bei diesem bekannten Verschleißindikator kann zwar eine im wesentlichen geschlossene Gleitfläche des stationären Gleitringes auch nach seinem Ansprechen aufrechterhalten werden. Es besteht jedoch die Gefahr, daß sich die freigelegten, beispielsweise aus Drahtstiften bestehenden Elektroden in die Gleitfläche des rotierenden Gegenringes einarbeiten, so daß dieser erst durch die Einwirkung eines Bestandteiles des Verschleißindikators betriebsunfähig wird und ebenfalls erneuert werden muß. Ein weiterer Nachteil des bekannten Verschleißindikators besteht darin, daß er zu seiner Funktionsfähigkeit zwingend einen aus elektrisch leitendem oder mindestens halbleitendem Material bestehenden rotierenden Gegenring benötigt, so daß sein Einsatzgebiet stark eingeschränkt ist.

Bei einem anderen bekannten Verschleißindikator für Gleitringdichtungen (DE-A-3 304 097) erstreckt sich, ausgehend von der Rückseite des stationären Gleitringes, eine Sacklochbohrung bis zu einem Abstand von der Gleitfläche dieses Gleitringes, welcher gleich der Dicke der betriebsmäßig abtragbaren Verschleißschicht ist. Diese Sacklochbohrung ist über eine Leitung mit einem Indikator, beispielsweise einer Auffangflasche, einem Strömungswächter oder einem Druckschalter verbunden, der ein Steuer- oder Meldesignal abgibt, wenn durch Verschleiß aus der Sacklochbohrung eine Durchgangsbohrung wird, die sich zur Gleitfläche öffnet und in die das abzudichtende Medium eintritt.

Dieser bekannte Verschleißindikator ist zwar auch bei rotierenden Gegenringen aus nichtleitendem Material funktionsfähig, hat aber den Nachteil, daß er nur bei relativ großen Dichtungsabmessungen einsetzbar ist, bei Trockenlauf oder betriebsmäßig sehr geringer Leckrate keine sichere Anzeige erhalten werden kann und daß im Bereich der offengelegten Sacklochbohrung der sich zwischen den Gleitflächen bildende hydrodynamische Schmierfilm abreißt und dadurch Trockenlauf auftreten kann, der zu einer Auswechslung unmittelbar nach Ansprechen des Verschleißindikators zwingt.

Aufgabe der Erfindung ist es, einen Verschleißindikator für den stationären Gleitring zu schaffen, der sowohl bei einem aus isolierendem Material bestehenden rotierenden Gegenring funktionsfähig ist, als auch bei seiner Auslösung zu keiner schädlichen Unterbrechung in der Gleitfläche im stationären Gleitring führt.

Diese Aufgabe wird, ausgehend von einem Verschleißindikator der eingangs genannten Art bei aus beliebigem Material bestehenden Gleitring und Gegenring erfindungsgemäß nach dem Anspruch 1 dadurch gelöst, daß das frontseitige Ende mindestens einer der Elektroden aus einem, bezogen auf den Gegenring geringere mechanische Festigkeit aufweisendem, elektrisch wenigstens halbleitendem Material besteht, mit dem durch Abrieb auf der Gleitfläche des Gegenringes eine haftende Materialspur auftragbar ist.

Bei dieser Ausbildung wird nach Abtragung der vorgegebenen Verschleißschicht-Dicke der Stromkreis zwischen den beiden Elektroden und damit zwischen den beiden Eingangspolen der Auswertschaltung durch die auf den sich drehenden Gegenring aufgetragene leitende Materialspur geschlossen, welche von einer oder beiden Elektroden stammt. Es braucht daher weder der Gleitring, noch der Gegenring aus elektrisch leitendem oder halbleitendem Material zu bestehen, wobei selbstverständlich die Funktionsfähigkeit auch dann gegeben ist, wenn der Gleitring und/oder der Gegenring aus leitendem Material gebildet ist. Der erfindungsgemäße Verschleißindikator ist daher universell bei beliebigen Werkstoffpaarungen für den Gleitring und Gegenring einsetzbar.

Eine weitere vereinfachte Lösung der Aufgabe ergibt sich, wenn der stationäre Gleitring aus elektrisch leitendem oder halbleitendem Material besteht. Ausgehend von einem Verschleißindikator der eingangs genannten Art, der jedoch in ebenfalls schon aus der DE-U-7 343 216 bekannten Weise im stationären Gleitring nur eine gegen diesen isolierte Elektrode aufweist, die an den einen der beiden Eingangspole der Auswertschaltung angeschaltet ist, besteht erfindungsgemäß die weitere Lösung dieser Aufgabe gemäß Anspruch 2 darin, daß mindestens das frontseitige Ende der Elektrode aus einem, bezogen auf den Gegenring geringere mechanische Festigkeit aufweisendem, elektrisch wenigstens halbleitendem Material besteht, mit dem durch Abrieb auf der Gleitfläche des Gegenringes eine haftende Materialspur auftragbar ist und daß der aus elektrisch leitendem oder halbleitendem Material bestehende stationäre Gegenring an den anderen Eingangspol der Auswertschaltung angeschaltet ist. In diesem Fall übernimmt der stationäre Gleitring auch die Funktion einer Elektrode.

Vorzugsweise besteht mindestens das frontseitige Ende jeder Elektrode aus Graphit. In vorteilhafter und an sich bekannter Ausgestaltung ist jede Elektrode vorzugsweise in einer von der Rückseite des stationären Gleitringes ausgehenden Sacklochbohrung zusammen mit einer sie seitlich und stirnseitig umhüllenden elektrischen Isolierung angeordnet. Dabei umschließt vorteilhaft jeweils eine Hülse aus elektrisch leitendem Material einerseits die von ihrer Aderisolation freigelegte Ader einer isolierten elektrischen Anschlußleitung und andererseits das rückseitige Ende einer Elektrode, wobei die die Sacklochbohrung ausfüllende elektrische Isolierung auch die Hülse umhüllt.

Ausführungsbeispiele der Erfindung werden im folgenden anhand der Zeichnungen beschrieben, in denen zeigt:

Fig. 1 einen axialen Schnitt durch eine mit einem erfindungsgemäßen Verschleißindikator ausgerüstete Gleitringdichtung und

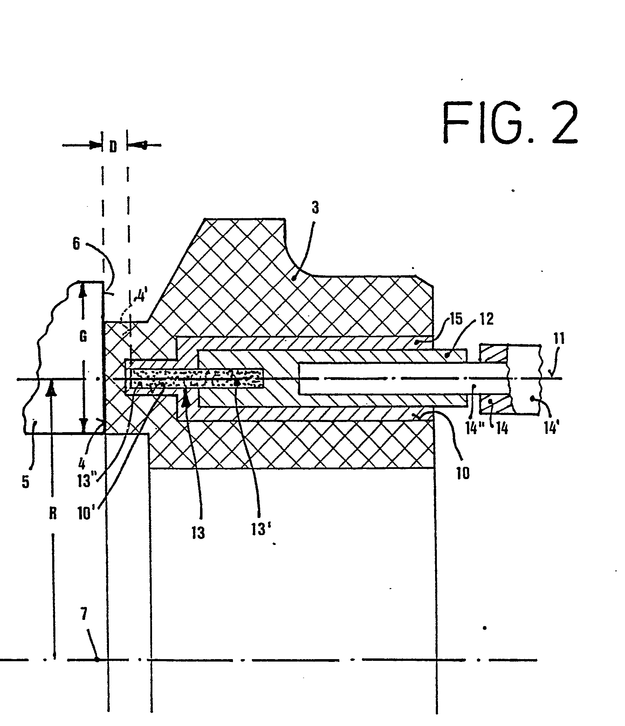

Fig. 2 eine Einzelheit der Fig. 1 in vergrößerter Schnittdarstellung.

Die mit einem Verschleißindikator ausgerüstete Gleitringdichtung enthält in üblicher Weise einen in einem Dichtungsgehäuse 1 über einen O-Ring 2 abdichtend gelagerten, aus leitendem oder halbleitendem Material bestehenden stationären Gleitring 3, an dessen in einer Radialebene gelegenen Gleitfläche 4 ein Gegenring 5 mit seiner Gleitfläche 6 anliegt. Der Gegenring ist dichtend, drehfest und axial verschieblich auf einer um ihre Achse (gleichzeitig auch Dichtungsachse) 7 umlaufenden Welle 8 angeordnet und durch Schraubenfedern 9 in Richtung auf den stationären Gleitring 3 vorgespannt. Dieser Gleitring 3 weist im Neuzustand im Anschluß an seine Gleitfläche 4 eine Verschleißschicht auf, die beim Betrieb der Gleitringdichtung um eine axiale Dicke D, d. h. bis zu einer neuen Lage der Gleitfläche 4' abgetragen werden kann, ohne daß die Betriebssicherheit gefährdet ist.

Der Gleitring 3 enthält eine von seiner der Gleitfläche 4 gegenüberliegenden Rückseite ausgehende gestufte Sacklochbohrung 10, deren Achse 11 sich parallel zur Wellen- und Dichtungsachse 7 erstreckt und innerhalb der radialen Breite G der Gleitfläche 6 des rotierenden Gegenringes 5 verläuft. Im Neuzustand erstreckt sich der kleinste und innerste Bohrungsabschnitt 10' der Sacklochbohrung um einen kleinen, in der Größenordnung eines Millimeters liegenden Betrag näher an die Gleitfläche 4, als der Verschleißschicht-Dicke D entspricht.

Eine Hülse 12 aus elektrisch leitendem Material verbindet kraft- und/oder formschlüssig das rückwärtige Ende 13' einer in Form eines zylindrischen Stiftes aus Graphit ausgebildeten Elektrode 13 mit der von ihrer Aderisolation 14' freigelegten Ader 14'' einer Anschlußleitung 14. Die Einheit aus Elektrode 13 und Hülse 12 ist in der Sacklochbohrung 10 koaxial zu ihrer Achse 11 so angeordnet, daß sich das frontseitige Ende 13'' der Elektrode 13 in dem kleinsten Bohrungsabschnitt 10' und die Hülse 12 in dem weiteren Teil der Sacklochbohrung 10 unter Belassung eines allseitigen Freiraumes befindet, wobei die Stirnfläche der Elektrode 13 in der Ebene liegt, welche die nach Abtragung der Verschleißschicht-Dicke D gebildete abgenützte Gleitfläche 4' enthält. Der Freiraum ist mit einer elektrischen Isolierung 15 ausgefüllt, die auch die Elektrode und Hülse mechanisch in der Sacklochbohrung fixiert.

Der stationäre Gleitring 3 ist über eine weitere Anschlußleitung 16 mit einem Eingangspol A und die Elektrode 13 ist über ihre Anschlußleitung 14 mit einem Eingangspol B einer Auswertschaltung 17 verbunden, welche abhängig von der Veränderung des zwischen ihren Eingangspolen A, B anliegenden äußeren Widerstandes ein elektrisches Steuersignal an ihren Ausgangspolen S, T abgibt.

Wird im Betrieb der Gleitringdichtung die Verschleißschicht um die Dicke D abgetragen, so wird die Elektrode 13 freigelegt und gelangt in Kontakt mit dem rotierenden Gegenring 5, wobei das Graphit-Material der Elektrode 13 auf dessen Gleitfläche 6 durch Abrieb eine kreisförmige leitende Bahn bildet, welche eine elektrische Verbindung zwischen der isolierend in dem stationären Gleitring 3 eingebauten Elektrode 13 und diesem Gleitring und damit auch eine Leitverbindung zwischen den Eingangspolen A, B der Auswertschaltung 17 herstellt.

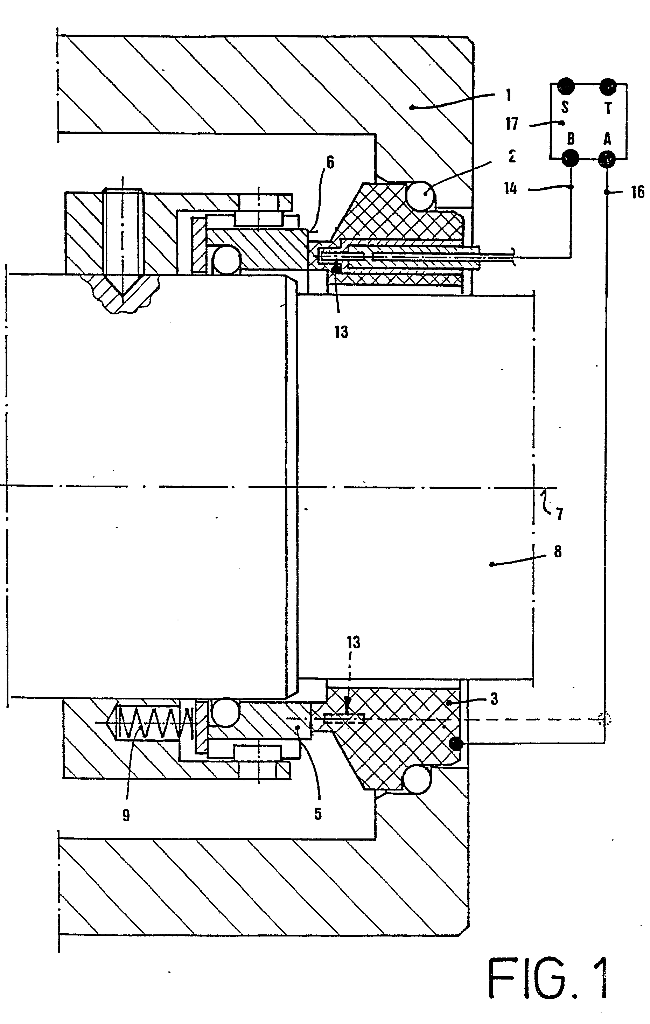

Bei einer abgewandelten Ausführungsform des Verschleißindikators, dessen Funktion auch bei einem aus isolierendem Material bestehenden Gleitring 3 gegeben ist, ist eine zweite, gleich ausgebildete und angeordnete Elektrode winkelmäßig versetzt im gleichen Radialabstand R im Gleitring 3 eingebaut (in Fig. 1 durch gestrichelte Linien angedeutet), wobei der Eingangspol A der Auswerteschaltung mit dieser zweiten Elektrode anstelle mit dem Gleitring 3 verbunden ist. Die nach Abtragung der Verschleißschicht von beiden Elektroden 13 aufgetragene leitende Bahn verbindet diese beiden Elektroden und damit die Eingangspole A, B.

## Patentansprüche

1. Verschleißindikator für den stationären (drehfest gehaltenen), mit seiner in einer Radialebene gelegenen Gleitfläche (4) an einem rotierenden Gegenring (5) anliegenden Gleitring (3) einer Gleitringdichtung, welcher nach Abtragung einer vorgegebenen axialen Verschleißschicht-Dicke (D) ein für Melde- und/oder Steuerzwecke auswertbares elektrisches Steuersignal abgibt, mit zwei gegeneinander isolierten Elektroden (13) aus elektrisch leitendem Material, welche beide am stationären Gleitring (3) mit ihren zu dessen Gleitfläche (4) gerichteten frontseitigen Enden (13″) in einem der vorgegebenen Verschleißschicht-Dicke (D) entsprechenden Abstand von dieser Gleitfläche, sowie in einem innerhalb der radialen Breite (G) der Gleitfläche (6) des Gegenringes (5) liegenden, im wesentlichen gleich großen Radialabstand (R) von der Dichtungsachse (7) winkelmäßig versetzt angeordnet sind, und mit einer auf Änderungen des elektrischen Widerstandes zwischen zwei Eingangspolen (A, B) unter Abgabe des elektrischen Steuersignals reagierenden Auswertschaltung (17), deren beide Eingangspole (A, B) an die Elektroden (13) angeschaltet sind, dadurch gekennzeichnet, daß mindestens das frontseitige Ende (13″) mindestens einer der Elektroden (13) aus einem, bezogen auf den Gegenring (5) geringere mechanische Festigkeit aufweisendem, elektrisch wenigstens halbleitendem Material besteht, mit dem durch Abrieb auf der Gleitfläche (6) des Gegenringes (5) eine haftende Materialspur auftragbar ist.

2. Verschleißindikator für den stationären (drehfest gehaltenen), mit seiner in einer Radialebene gelegenen Gleitfläche (4) an einem rotierenden Gegenring (5) anliegenden Gleitring (3) einer Gleitringdichtung, welcher nach Abtragung einer vorgegebenen axialen Verschleißschicht-Dicke (D) ein für Melde- und/oder Steuerzwecke auswertbares elektrisches Steuersignal abgibt, mit einer isolierten Elektrode (13) aus elektrisch leitendem Material, welche am stationären Gleitring (3) mit ihrem zu dessen Gleitfläche (4) gerichtetem frontseitigen Ende (13″) in einem der vorgegebenen Verschleißschicht-Dicke (D) entsprechenden Abstand von dieser Gleitfläche, sowie in einem innerhalb der radialen Breite (G) der Gleitfläche (6) des Gegenringes (5) liegenden Radialabstand (R) von der Dichtungsachse (7) angeordnet ist, und mit einer auf Änderungen des elektrischen Widerstandes zwischen zwei Eingangspolen (A, B) unter Abgabe des elektrischen Steuersignals reagierenden Auswertschaltung (17), von der ein Eingangspol (B) an die Elektrode (13) angeschaltet ist, dadurch gekennzeichnet, daß mindestens das frontseitige Ende (13″) der Elektrode (13) aus einem, bezogen auf den Gegenring (5) geringere mechanische Festigkeit aufweisendem, elektrisch wenigstens halbleitendem Material besteht, mit dem durch Abrieb auf der Gleitfläche (6) des Gegenringes (5) eine haftende Materialspur auftragbar ist und daß der aus elektrisch leitendem oder halbleitendem Material bestehende stationäre Gleitring (3) an den anderen Eingangspol (A) der Auswertschaltung (17) angeschaltet ist.

3. Verschleißindikator nach Anspruch 1 oder 2, dadurch gekennzeichnet, daß mindestens das frontseitige Ende (13″) jeder Elektrode (13) aus Graphit besteht.

4. Verschleißindikator nach Anspruch 1, 2 oder 3, dadurch gekennzeichnet, daß jede Elektrode (13) in einer von der Rückseite des stationären Gleitringes (3) ausgehende Sacklochbohrung (10) zusammen mit einer sie seitlich und stirnseitig umhüllenden elektrischen Isolierung (15) angeordnet ist.

5. Verschleißindikator nach Anspruch 4, dadurch gekennzeichnet, daß jeweils eine Hülse (12) aus elektrisch leitendem Material einerseits die von ihrer Aderisolation (14′) freigelegte Ader (14″) einer isolierten elektrischen Anschlußleitung (14) und andererseits das rückseitige Ende (13″) einer Elektrode (13) umschließt und daß die die Sacklochbohrung (10) ausfüllende elektrische Isolierung (15) auch die Hülse (12) umhüllt.

6. Verschleißindikator nach Anspruch 4 oder 5, dadurch gekennzeichnet, daß die Sacklochbohrung (10) im Durchmesser gestuft ausgebildet ist und daß der innerste, im Durchmesser kleinste Bohrungsabschnitt (10′) ausschließlich das aus Graphit bestehende frontseitige Ende (13″) der Elektrode (13) und den dieses umhüllenden Teil der elektrischen Isolierung (15) aufnimmt.

7. Verschleißindikator nach Anspruch 5, dadurch gekennzeichnet, daß die Hülse (12) und ein Anfangsabschnitt der Aderisolation (14) von der elektrischen Isolierung (15) umhüllt ist und daß der Anfang der Aderisolation (15) in die Sacklochbohrung (10) einsteht.

8. Verschleißindikator nach Anspruch 5 oder 7, dadurch gekennzeichnet, daß die Hülse (12) aus einer leitenden oder halbleitenden Verbindungsmasse besteht.

## Claims

1. A wear sensor for the stationary (held fixed against rotation) slide ring (3) of a mechanical seal with its sliding surface (4), positioned in a radial plane, contacting a rotating counter ring (5), which wear sensor emits an electric control signal which can be evaluated for indication and/or control purposes, after the removal of a given axial wear layer thickness (D), having two mutually insulated electrodes (13) of electrically conductive material, which are both arranged at an angle to each other on the stationary slide ring (3) with their front ends (13″), facing the sliding surface (4) of the latter, at a distance from this sliding surface corresponding to the given wear layer thickness (D), and at an essentially equal radial distance (R) from the seal axis (7), lying within the radial width (G) of the sliding surface (6) of the counter ring (5), and having an evaluation circuit (17) which responds to changes in the electrical resistance between two input poles (A, B) with emission of the electric control signal, the two input poles (A, B) of which are connected to the electrodes (13), characterized in that at least the front end (13″) of at least one of the electrodes (13) is composed of an electrically at least semi-conducting material of lower mechanical strength than the counter ring (5), by means of which an adhering material trace can be applied by abrasion on the sliding surface (6) of the counter ring (5).

2. A wear sensor for the stationary (held fixed against rotation) slide ring (3) of a mechanical seal with its sliding surface (4), positioned in a radial plane, contacting a rotating counter ring (5), which wear sensor emits an electric control signal which can be evaluated for indication and/or control purposes, after the removal of a given axial wear layer thickness (D), having an insulated electrode (13) of electrically conductive material, which is arranged on the stationary slide ring (3) with its front end (13″), facing the sliding surface (4) of the latter, at a distance from this sliding surface corresponding to the given wear layer thickness (D), and at a radial distance (R) from the seal axis (7), lying within the radial width (G) of the sliding surface (6) of the counter ring (5), and having an evaluation circuit (17) which responds to changes in the electrical resistance between two input poles (A, B) with emission of the electric control signal, one input pole (B) of which is connected to the electrode (13), characterized in that at least the front end (13″) of the electrode (13) is composed of an electrically at least semi-conducting material of lower mechanical strength than the counter ring (5), by means of which an adhering material trace can be applied by abrasion on the sliding surface (6) of the counter ring (5) and in that the stationary slide ring (3) composed of electrically conducting or semi-conducting material is connected to the other input pole (A) of the evaluation circuit (17).

3. A wear sensor according to either claim 1 or claim 2, characterized in that at least the front end (13″) of each electrode (13) is composed of graphite.

4. A wear sensor according to any of claims 1, 2 or 3, characterized in that each electrode (13) is arranged in a blind hole (10) running from the rear of the stationary slide ring (3), together with an electrical insulation (15) enveloping it at the sides and at the ends.

5. A wear sensor according to claim 4, characterized in that in each case a sleeve (12) of electrically conductive material encloses on the one hand the conductor (14″), bared of its conductor insulation (14′), of an insulated electric connecting line (14) and on the other hand the rear end (13″) of an electrode (13) and in that the electrical insulation (15) filling out the blind hole bore (10) also envelops the sleeve (12).

6. A wear sensor according to either claim 4 or claim 5, characterized in that the blind hole bore (10) is designed with a stepped diameter and in that the innermost bore section (10′) of smallest diameter, exclusively receives the graphite front end (13″) of the electrode (13) and the part of the electrical insulation (15) enveloping said front end.

7. A wear sensor according to claim 5, wherein the sleeve (12) and an initial section of the conductor insulation (14) are enveloped by the electrical insulation (15) and in that the beginning of the conductor insulation (15) goes into the blind hole bore (10).

8. A wear sensor according to either claim 5 or claim 7, characterized in that the sleeve (12) consists of a conductive or semi-conducting bonding compound.

**Revendications**

1. Indicateur d'usure pour le joint lisse (3) fixe (immobilisé contre les rotations), s'appliquant par sa surface lisse (4) située dans un plan radial sur un contre-joint (5) rotatif, d'une garniture d'étanchéité à joint lisse, indicateur d'usure qui après érosion d'une épaisseur de couche d'usure (D) axiale, prédéterminée, émet un signal électrique qui peut être exploité à des fins de signalisation et/ou de commande, comportant deux électrodes (13) mutuellement isolées en matériau électriquement conducteur, qui sont disposées toutes deux, de manière angulairement décalée, sur le joint lisse (3) fixe, leurs extrémités (13′) du côté frontal orientées vers sa surface lisse (4) à une distance de ladite surface lisse correspondant à l'épaisseur prédéterminée (D) de la couche d'usure, ainsi qu'à une distance radiale (R) sensiblement égale de l'axe (7) du revêtement, distance située à l'intérieur de la largeur radiale (G) de la surface lisse (6) de la contre-bague (5), et comportant un circuit d'analyse (17) réagissant aux modifications de la résistance électrique entre deux pôles d'entrée (A, B) par l'émission du signal de commande électrique, circuit d'analyse dont les deux pôles d'entrée (A, B) sont connectés aux électrodes (13), caractérisé par le fait qu'au moins l'extrémité (13″) côté frontal d'au moins d'une des électrodes (13) est constituée en un matériau électriquement au moins semi-conducteur et présentant une résistance mécanique inférieure à celle du contre-joint (5), matériau qui permet d'appliquer par abrasion une trace de matériau venant adhérer à la surface lisse (6) du contre-joint (5).

2. Indicateur d'usure pour le joint lisse (3) fixe (immobilisé contre les rotations), s'appliquant par sa surface lisse (4) située dans un plan radial sur un contre-joint (5) rotatif, d'une garniture d'étanchéité à joint lisse, indicateur d'usure qui après érosion d'une épaisseur de couche d'usure (D) axiale, prédéterminée, émet un signal électrique qui peut être exploité à des fins de signalisation et/ou de commande, comportant deux électrodes (13) mutuellement isolées en matériau électriquement conducteur, qui sont disposées toutes deux, de manière angulairement décalée, sur le joint lisse (3) fixe, leurs extrémités (13′) du côté frontal orientées vers sa surface lisse (4) à une distance de ladite surface lisse correspondant à l'épaisseur prédéterminée (D) de la couche d'usure, ainsi qu'à une distance radiale (R) sensiblement égale de l'axe (7) du revêtement, distance située à l'intérieur de la largeur radiale (G) de la surface lisse (6) de la contre-bague (5), et comportant un circuit d'analyse (17) réagissant aux modifications de la résistance électrique entre deux pôles d'entrée (A, B) par l'émission du signal de commande électrique, circuit d'analyse dont les deux pôles d'entrée (A, B) sont connectés aux électrodes (13), caractérisé par le fait qu'au moins l'extrémité (13') du côté frontal de l'électrode (13) est constituée en un matériau électriquement au moins semi-conducteur et présentant une résistance mécanique inférieure à celle du contre-joint (5), matériau qui permet, par abrasion, d'appliquer sur la surface lisse (6) du contre-joint (5) une trace adhérente de matériau et par le fait que le joint lisse (3) fixe constitué en un matériau électriquement conducteur ou semi-conducteur est connecté sur l'autre pôle d'entrée (A) du circuit d'analyse (17).

3. Indicateur d'usure selon la revendication 1 ou 2, caractérisé par le fait qu'au moins l'extrémité (13') du côté frontal de chaque électrode (13) est constituée en graphite.

4. Indicateur d'usure selon la revendication 1, 2 ou 3, caractérisé par le fait que chaque électrode (13) est disposée, conjointement à une gaine électriquement isolante (15) qui l'enveloppe latéralement et du côté frontal, dans un perçage borgne (10) partant du côté arrière du joint lisse (3) fixe.

5. Indicateur d'usure selon la revendication 4, caractérisé par le fait que respectivement une douille (12) en matériau électriquement conducteur enveloppe d'une part le conducteur (14") dépouillé de son isolation (14') d'une conduite électrique isolée (14) d'une part, et d'autre part, l'extrémité arrière (13') d'une électrode (13) et par le fait que l'isolation électrique (15) remplissant le perçage borgne (10) enveloppe également la douille (12).

6. Indicateur d'usure selon la revendication 4 ou 5, caractérisé par le fait que le perçage borgne (10) est réalisé de manière à présenter un diamètre progressif et que sa section (10') la plus profonde de diamètre le plus faible reçoit exclusivement l'extrémité (13') frontale constituée en graphite de l'électrode (13) et la partie de l'isolation électrique (15) qui enveloppe ladite extrémité (13').

7. Indicateur d'usure selon la revendication 5, caractérisé par le fait que la douille (12) et une section initiale de l'isolation (14) sont gainées par l'isolation électrique (15) et par le fait que la partie initiale de l'isolation (15) pénètre dans le perçage borgne (10).

8. Indicateur d'usure selon la revendication 5 ou 7, caractérisé par le fait que la douille (12) est constituée en un alliage conducteur ou semi-conducteur.

# FIG. 1

# FIG. 2